# FASCICULE DE BREVET EUROPEEN

(11) **EP 2 324 694 B1**
(45) Date de publication et mention de la délivrance du brevet: **25.06.2014**
(21) Numéro de dépôt: 10173849.0
(22) Date de dépôt: 24.08.2010
(51) Int. Cl.: A01C 3/06

(54) **Procédé de commande d'un épandeur et épandeur.**
Steuerverfahren einer Streumaschine, und Streumaschine
Method for controlling a spreader and spreader

(30) Priorité: 01.09.2009 FR 0955951
(43) Date de publication de la demande: 25.05.2011
(73) Titulaire: Pérard, 55100 Verdun (FR)
(72) Inventeur: Pérard, Patrick, 55120 Lavoye (FR)
(74) Mandataire: Brungard, Yves Francois

(56) Documents cités:
- EP-A1- 1 797 751
- DE-U1-202008 014 060
- FR-A1- 2 759 850
- FR-A1- 2 851 411

## Description

### DOMAINE DE L'INVENTION

La présente invention se situe dans le domaine du machinisme agricole et concerne plus particulièrement un épandeur, destiné notamment mais non exclusivement à l'épandage de fumier, que celui-ci soit sous forme de fumier pâteux, solide, pailleux, humide, frais, fumier de volatiles ou autres animaux.

### TECHNIQUE ANTÉRIEURE

Un épandeur est constitué d'une caisse montée sur un ou deux essieux et tractable par un engin agricole, d'un tapis de transport motorisé à commande hydraulique, s'étendant sensiblement horizontalement au fond de la caisse, et de deux hérissons horizontaux ou verticaux, entraînés en rotation selon leurs axes respectifs. Le principe de fonctionnement est d'amener la matière stockée dans la caisse jusqu'aux hérissons grâce à l'avance du tapis de transport. Les hérissons tournent, déchiquètent la matière qui est amenée à leur contact par le tapis, et expulsent la matière derrière le convoi formé par l'engin agricole et l'épandeur.

Le document FR 2 851 411 décrit un exemple d'un tel épandeur. Sur ce modèle, la matière déchiquetée n'est pas directement épandue, mais est canalisée vers une table d'épandage. L'épandeur comporte des moyens indépendants d'entraînement hydrauliques du tapis, des hérissons et de la table d'épandage. En particulier, la vitesse du tapis est asservie à la pression d'alimentation des hérissons afin de maintenir sensiblement constante la pression sur les hérissons, et donc la quantité de matière amenée aux hérissons. En cas de bourrage, la vitesse du tapis est diminuée, voire éventuellement annulée, jusqu'à ce que la quantité de matière excédentaire soit évacuée par les hérissons.

Cependant, une telle solution nécessite des moyens d'entraînement hydrauliques pour être mise en oeuvre. De plus, en cas de présence d'un corps étranger dans la matière d'une taille telle qu'il bloque les hérissons, la diminution de l'avancement du tapis ne suffirait pas à débloquer les hérissons.

### OBJECTIFS DE L'INVENTION

L'invention vise donc à fournir un procédé de commande d'un épandeur pour gérer les cas de blocage des moyens de déchiquetage de la matière. Elle vise aussi à fournir un épandeur mettant en oeuvre ce procédé.

### EXPOSÉ DE L'INVENTION

Avec ces objectifs en vue, l'invention a pour objet un procédé de commande d'un épandeur, l'épandeur comportant une caisse, un tapis de transport motorisé par des moyens d'entraînement de tapis et s'étendant sensiblement horizontalement au fond de la caisse, et des moyens de déchiquetage pour déchiqueter la matière transportée par le tapis vers les moyens de déchiquetage, les moyens de déchiquetage étant entraînés par des moyens d'entraînement secondaires, procédé selon lequel on commande le fonctionnement des moyens de déchiquetage en même temps que l'avancement de la matière vers les moyens de déchiquetage et, lorsqu'on détecte que le couple d'entraînement des moyens de déchiquetage est limité par un système de limitation du couple d'entraînement, on commande une inversion du sens d'avancement du tapis.

Selon le procédé de l'invention, il devient possible de gérer automatiquement la présence d'un corps étranger ou un bourrage bloquant les moyens de déchiquetage. Lorsque le système de limitation du couple entre en action, c'est que les moyens de déchiquetage sont freinés ou bloqués par un bourrage ou un corps étranger. Le système de limitation du couple limite les efforts auxquels les organes mécaniques sont soumis, ce qui évite leur détérioration. En inversant la marche du tapis, on dégage les moyens de déchiquetage qui sont alors libérés automatiquement de la matière en excès ou du corps étranger. On gère ainsi de manière plus efficace que dans l'art antérieur les problèmes d'alimentation des moyens de déchiquetage. De plus, les moyens pour mettre en oeuvre ce procédé sont plus simples, comme on le verra mieux par la suite.

Selon une disposition particulière, on inverse le sens d'avancement pendant une durée prédéterminée. Le retour en fonctionnement normal est alors automatique. De plus, les moyens de mise en oeuvre d'une telle temporisation sont très simples.

Selon une autre disposition, on inverse le sens d'avancement pour une course prédéterminée du tapis. On garantit ainsi un dégagement suffisant de la matière.

Selon une autre disposition encore, on inverse le sens d'avancement jusqu'à la fin de la limitation du couple d'entraînement des moyens de déchiquetage. La remise en fonctionnement est réalisée dès que possible, ce qui assure une grande productivité en limitant l'inversion au strict nécessaire.

Pour des moyens d'entraînement secondaires comportant un limiteur de couple mécanique sur un arbre en rotation, on déduit, selon l'invention, que le couple est limité lorsque le rapport entre une vitesse de rotation mesurée sur un organe des moyens de déchiquetage et une vitesse de rotation en amont du système de limitation est inférieur à un seuil prédéterminé. Les moyens de déchiquetage peuvent être entraînés par un arbre de transmission, entraîné lui-même par le tracteur par l'intermédiaire d'une prise de force. On prévoit dans ce cas un limiteur de couple mécanique, à cames ou à disques par exemple. En fonctionnement normal, les moyens de déchiquetage ont une vitesse de rotation en rapport fixe avec celle de l'arbre d'entraînement. Mais si le limiteur de couple entre en action, les moyens de déchiquetage ont une vitesse de rotation inférieure à ce rapport normal. La mesure de la vitesse, directement ou par dérivation d'une mesure de position angulaire, permet d'accéder à cette information d'entrée en service du limiteur de couple. On constate que ces moyens mécaniques et de mesure par vitesse sont globalement plus simples que des moyens d'entraînement hydrauliques complétés par un capteur de pression.

L'invention a aussi pour objet un épandeur de matière solide, notamment de fumier, comportant une caisse, un tapis de transport motorisé par des moyens d'entraînement de tapis et s'étendant sensiblement horizontalement au fond de la caisse, des moyens de déchiquetage pour déchiqueter la matière transportée par le tapis vers les moyens de déchiquetage, et des moyens d'entraînement secondaires pour entraîner les moyens de déchiquetage, des moyens de commande pour piloter les moyens d'entraînement du tapis. Il comporte en outre un système de limitation du couple d'entraînement des moyens de déchiquetage, des moyens de détection de l'actionnement du système de limitation connectés aux moyens de commande, les moyens de commande pilotant l'inversion du mouvement du tapis lorsque le système de limitation entre en action.

Selon un mode de réalisation, les moyens d'entraînement de tapis sont hydrauliques. On peut ainsi facilement piloter une inversion du mouvement du tapis et moduler la vitesse d'avancement.

Selon une disposition constructive, les moyens d'entraînement secondaires sont mécaniques, les moyens de détection comportant deux capteurs de position angulaire ou de vitesse respectivement en amont et en aval du système de limitation. Les informations des capteurs sont traitées par les moyens de commande pour en déduire si les moyens de limitation sont en action ou non.

De manière particulière, les moyens de commande comportent un registre pour mémoriser le nombre de fois où le système de limitation a fonctionné. On conserve ainsi un historique de la vie de l'appareil.

### BRÈVE DESCRIPTION DES FIGURES

L'invention sera mieux comprise et d'autres particularités et avantages apparaîtront à la lecture de la description qui va suivre, la description faisant référence aux dessins annexés parmi lesquels :
- la figure 1 est une vue de côté d'un épandeur conforme à l'invention ;
- la figure 2 est une vue de dessous de l'épandeur de la figure 1 ;
- la figure 3 est une vue en coupe de l'épandeur selon la ligne III-III de la figure 2 ;
- la figure 4 est une vue d'un capteur selon le détail IV de la figure 3.

### DESCRIPTION DETAILLÉE

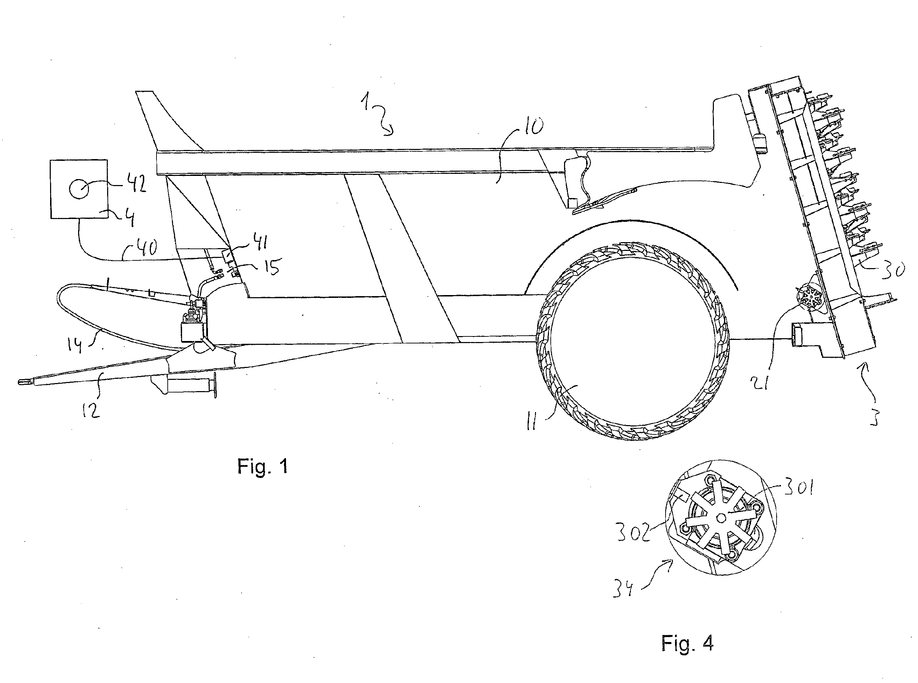

L'épandeur 1 montré figure 1 est essentiellement une remorque comportant une caisse 10 ouverte à l'arrière, montée sur un essieu porteur muni de roues 11 et d'un timon 12 d'attelage à un tracteur. Un arbre 13 est aussi prévu pour relier la remorque à une prise de force du tracteur, ainsi qu'à des moyens 14 permettant de manière générale une commande hydraulique des organes de la remorque.

Un tapis 20 de transport est installé de manière connue en soi au fond de la caisse 10. Ce tapis 20 est entraîné par des moyens d'entraînement de tapis comportant un ensemble motoréducteur 21 qui lui transmet un mouvement de déplacement vers l'arrière, selon la flèche F1. Le motoréducteur 21 est alimenté en huile depuis le tracteur par l'intermédiaire d'un distributeur 15 proportionnel. Le distributeur 15 est piloté par un signal électrique et permet de régler la vitesse d'avancement du tapis 20 ou de l'inverser.

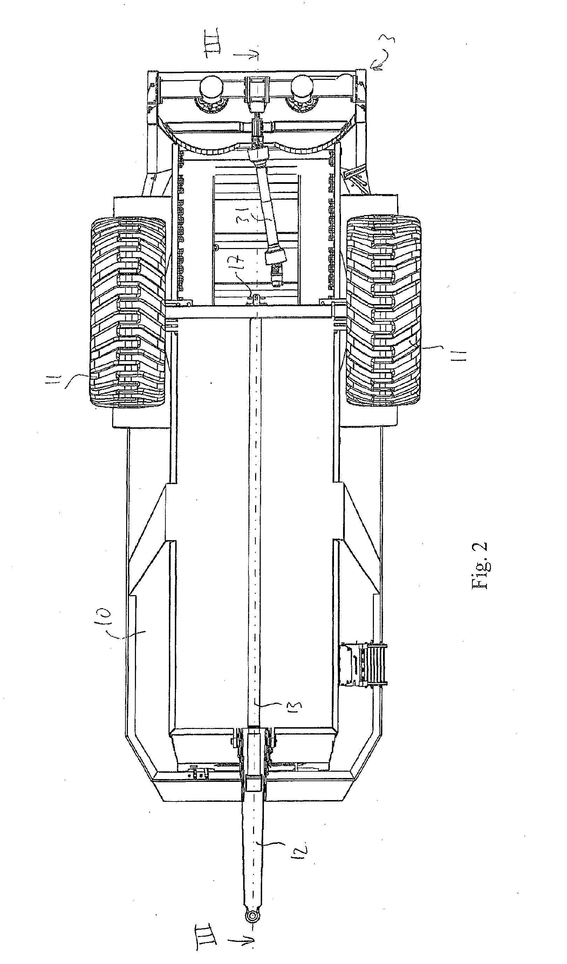

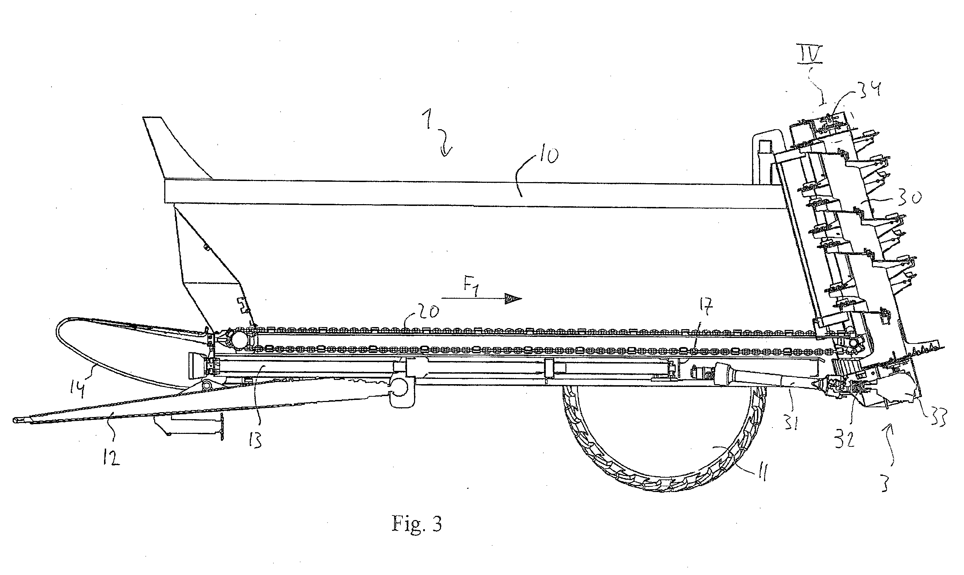

Un ensemble d'épandage 3 est fixé à l'arrière de la caisse 10. Cet ensemble d'épandage 3 comporte des moyens de déchiquetage formés par deux hérissons 30 montés rotatifs selon des axes sensiblement verticaux. Ils sont entraînés en rotation par l'arbre 13 s'étendant sous la caisse 10 depuis l'avant de l'épandeur 1 jusqu'à l'arrière, suivi d'un arbre à joint de cardan 31 et d'un réducteur 33 faisant également fonction de renvoi d'angle. L'arbre et l'arbre à joint de cardan sont représenté désaccouplés sur les figures 2 et 3, mais en fonctionnement normal, ils sont alignés. Un système de limitation, tel qu'un limiteur de couple 32 mécanique, est également placé entre l'arbre à joint de cardan 31 et le réducteur 33. Les deux hérissons 30 sont montés contrarotatifs.

Un premier capteur 17 est placé à l'extrémité arrière de l'arbre 13. Un deuxième capteur 34, similaire au premier capteur 17, est placé à l'extrémité de l'un des hérissons 30 et montré en détail sur la figure 4. Il comporte un disque 301 cranté entraîné en rotation et une cellule de proximité 302 fixée sur le châssis. La cellule de proximité 302 délivre un signal tout ou rien selon qu'elle est en regard d'un cran ou d'une saillie du disque 301. Lorsque l'arbre 13 ou le hérisson 30 est entraîné en rotation, elle délivre un signal alternatif dont la fréquence est représentative de la vitesse de rotation de l'arbre 13 ou du hérisson 30.

L'épandeur 1 est prévu avec des moyens de commande qui sont de préférence logés dans un boîtier 4 qui peut se placer dans la cabine du tracteur. Un câble multifilaire 40 relie le boîtier à un connecteur 41 sur le châssis de l'épandeur. Le boîtier est ainsi relié en particulier au distributeur 15 et aux capteurs 17, 34 de manière à recevoir les informations des capteurs et à piloter le distributeur 15. Un bouton 42, par exemple rotatif permet de commander la mise en route du tapis 20 et de choisir une vitesse d'avancement du tapis 20. Le bouton est relié par exemple à un rhéostat, non représenté, qui pilote l'ouverture plus ou moins grande du distributeur 15 de manière à moduler le débit de fluide hydraulique vers le motoréducteur 21. Les moyens de commande 4 comportent en outre un registre pour mémoriser le nombre de fois où le système de limitation 32 a fonctionné. Des moyens de lecture sont prévus pour lire le registre et transmettre l'information à un appareil de lecture extérieur ou à un afficheur.

Les moyens de commande 4 comportent un circuit électronique, non représenté, qui analyse les signaux en provenance des capteurs 17, 34. Chaque signal est converti en une grandeur représentant la vitesse mesurée par chaque capteur 17, 34. Puis la vitesse du hérisson 30, donnée par le deuxième capteur, est divisée par la vitesse de l'arbre 13, mesurée par le premier capteur. Le rapport issu de cette division est comparé à un seuil prédéterminé et, s'il est inférieur audit seuil, les moyens de commande mettent en route une procédure d'inversion de l'avancement du tapis 20. Pour cela, le distributeur 15 est commandé pour inverser le sens d'alimentation du motoréducteur 21 et ainsi inverser le sens d'avancement du tapis 20. En même temps, une alerte sonore ou visuelle est émise par le boitier 4. La fin de la mise en oeuvre de la procédure d'inversion est déterminée par le retour à la normale du rapport, c'est-à-dire qu'il revient à nouveau au-dessus du seuil prédéterminé. La fin de la mise en oeuvre de la procédure d'inversion peut aussi être modifiée ou remplacée par des temporisations minimales et/ou maximales ou par une hystérésis sur le seuil prédéterminé. Le registre est alors incrémenté d'une unité.

Typiquement, la vitesse de rotation de l'arbre 13 est de l'ordre de 1000 tr/min (ou min⁻¹), et celle des hérissons 30 est de 500 tr/min, donc avec un rapport de réduction de 2 au niveau du réducteur 33. Le seuil prédéterminé est par exemple 0,45 de telle sorte que la procédure d'inversion est déclenchée lorsque la vitesse de rotation des hérissons 30 est inférieure à 450 tr/min.

En fonctionnement normal, la caisse 10 est chargée de matière, telle que du fumier. Le conducteur du tracteur met en fonctionnement la prise de force du tracteur afin d'entraîner l'arbre 13 et les hérissons 30. Il met également en fonctionnement le tapis 20 à l'aide du boitier 4. La masse de matière est ainsi déplacée vers les hérissons 30 qui déchiquètent la matière et l'épandent à l'arrière du convoi, de manière connue en soi.

Lorsqu'un corps étranger se trouve dans la matière et que celui-ci arrive devant les hérissons 30, il se peut qu'il bloque ceux-ci. Le limiteur de couple 32 entre alors en fonction, ce qui permet à l'arbre 13 de continuer à tourner et à la vitesse des hérissons 30 de descendre, voire de s'annuler. Les moyens de commande détectent alors, grâce à la différence de vitesse, qu'un problème est intervenu et déclenchent la procédure d'inversion. La matière recule alors et se dégage des hérissons 30, libérant ainsi ceux-ci afin qu'ils reprennent leur vitesse normale de rotation. Quand la procédure d'inversion est terminée, le corps étranger a pu se placer différemment de manière à être éjecté. Si ce n'est pas le cas, l'alerte se produira à nouveau et le conducteur devra intervenir manuellement.

Cette procédure d'inversion permet de protéger l'épandeur contre des efforts excessifs et de gérer les incidents de manière automatique. Elle facilite l'utilisation de l'épandeur avec une bonne sécurité pour celui-ci.

## Revendications

1. Procédé de commande d'un épandeur (1), l'épandeur comportant une caisse (10), un tapis (20) de transport motorisé par des moyens d'entraînement de tapis (21) et s'étendant sensiblement horizontalement au fond de la caisse (10), et des moyens de déchiquetage (30) pour déchiqueter la matière transportée par le tapis (20) vers les moyens de déchiquetage (30), les moyens de déchiquetage (30) étant entraînés par des moyens d'entraînement secondaires (13), procédé selon lequel on commande le fonctionnement des moyens de déchiquetage (30) en même temps que l'avancement de la matière vers les moyens de déchiquetage (30), le procédé étant **caractérisé en ce que**, lorsqu'on détecte que le couple d'entraînement des moyens de déchiquetage (30) est limité par un système de limitation du couple (32) d'entraînement, on commande une inversion du sens d'avancement du tapis (20).

2. Procédé selon la revendication 1, selon lequel on inverse le sens d'avancement pendant une durée prédéterminée.

3. Procédé selon la revendication 1, selon lequel on inverse le sens d'avancement pour une course prédéterminée du tapis (20).

4. Procédé selon la revendication 1, selon lequel on inverse le sens d'avancement jusqu'à la fin de la limitation du couple d'entraînement des moyens de déchiquetage (30).

5. Procédé selon la revendication 1, pour des moyens d'entraînement secondaires (13, 31, 33) comportant un limiteur de couple (32) mécanique sur un arbre (13) en rotation, selon lequel on déduit que le couple est limité lorsque le rapport entre une vitesse de rotation mesurée sur un organe des moyens de déchiquetage (30) et une vitesse de rotation en amont du système de limitation (32) est inférieur à un seuil prédéterminé.

6. Epandeur de matière solide, notamment de fumier, comportant une caisse (10), un tapis (20) de transport motorisé par des moyens d'entraînement de tapis (20) et s'étendant sensiblement horizontalement au fond de la caisse (10), des moyens de déchiquetage (30) pour déchiqueter la matière transportée par le tapis (20) vers les moyens de déchiquetage (30), des moyens d'entraînement secondaires (13, 31) pour entraîner les moyens de déchiquetage (30), des moyens de commande (4) pour piloter les moyens d'entraînement (21) du tapis (20), **caractérisé en ce qu'**il comporte en outre un système de limitation (32) du couple d'entraînement des moyens de déchiquetage (30), des moyens de détection (17, 34) de l'actionnement du système de limitation (32) connectés aux moyens de commande (4), les moyens de commande (4) pilotant l'inversion du mouvement du tapis (20) lorsque le système de limitation (32) entre en action.

7. Epandeur selon la revendication 6, dans lequel les moyens d'entraînement de tapis (20) sont hydrauliques.

8. Epandeur selon la revendication 6, dans lequel les moyens d'entraînement secondaires (13, 31) sont mécaniques, les moyens de détection comportant deux capteurs (17, 34) de position angulaire ou de vitesse respectivement en amont et en aval du système de limitation (32).

9. Epandeur selon la revendication 6, dans lequel les moyens de commande (4) comportent un registre pour mémoriser le nombre de fois où le système de limitation (32) a fonctionné.

## Patentansprüche

1. Verfahren zum Steuern eines Streuers (1), der umfasst: einen Aufbau (10), einen Transportboden (20), der mit Mitteln für den Antrieb des Bodens (21) motorisiert ist und sich in etwa waagerecht zum Boden des Aufbaus (10) erstreckt, und Zerkleinerungsmittel (30) zum Zerkleinern des Materials, das auf dem Transportboden (20) zu den Zerkleinerungsmitteln (30) befördert wird, wobei die Zerkleinerungsmittel (30) von sekundären Antriebsmitteln (13) angetrieben werden und der Betrieb der Zerkleinerungsmittel (30) gleichzeitig mit dem Vorschub des Materials zu den Zerkleinerungsmitteln (30) gesteuert wird und das Verfahren **dadurch gekennzeichnet ist, dass** eine Umkehrung der Laufrichtung des Transportbodens (20) gesteuert wird, wenn erkannt wird, dass das Antriebsmoment der Zerkleinerungsmittel (30) durch ein System zur Begrenzung des Antriebsmoments (32) begrenzt wird.

2. Verfahren nach Anspruch 1, wonach die Laufrichtung für einen vorgegebenen Zeitraum umgekehrt wird.

3. Verfahren nach Anspruch 1, wonach die Laufrichtung für einen vorgegebenen Weg des Transportbodens (20) umgekehrt wird.

4. Verfahren nach Anspruch 1, wonach die Laufrichtung bis zum Ende der Begrenzung des Antriebsmoments der Zerkleinerungsmittel (30) umgekehrt wird.

5. Verfahren nach Anspruch 1 für sekundäre Antriebsmittel (13, 31, 33), die einen mechanischen Drehmomentbegrenzer (32) auf einer drehenden Welle (13) umfassen, wonach abgeleitet wird, dass das Drehmoment begrenzt ist, wenn das Verhältnis zwischen einer Drehzahl, die an einem Element der Zerkleinerungsmittel (30) gemessen wird, und einer Drehzahl vor dem Begrenzungssystem (32) unter einem vorgegebenen Schwellenwert liegt.

6. Streuer für Feststoffe, insbesondere Dung, der umfasst: einen Aufbau (10), einen Transportboden (20), der mit Mitteln für den Antrieb des Bodens (20) motorisiert ist und sich in etwa waagerecht zum Boden des Aufbaus (10) erstreckt, Zerkleinerungsmittel (30) zum Zerkleinern des Materials, das auf dem Transportboden (20) zu den Zerkleinerungsmitteln (30) befördert wird, sekundäre Antriebsmittel (13, 31) zum Antreiben der Zerkleinerungsmittel (30) und Steuermittel (4) zum Steuern der Antriebsmittel (21) des Transportbodens (20), **dadurch gekennzeichnet, dass** er darüber hinaus ein System zum Begrenzen des Antriebsmoments (32) der Zerkleinerungsmittel (30) und Mittel zum Erkennen (17, 34) der Aktivierung des Begrenzungssystems (32) umfasst, die an die Steuermittel (4) angeschlossen sind, wobei die Steuermittel (4) die Umkehrung der Bewegung des Transportbodens (20) steuern, wenn das Begrenzungssystem (32) anspricht.

7. Streuer nach Anspruch 6, bei dem die Mittel für den Antrieb des Bodens (20) hydraulisch sind.

8. Streuer nach Anspruch 6, bei dem die sekundären Antriebsmittel (13, 31) mechanisch sind, und die Erkennungsmittel zwei Geber (17, 34) für die Winkelposition oder die Geschwindigkeit vor beziehungsweise hinter dem Begrenzungssystem (32) umfassen.

9. Streuer nach Anspruch 6, bei dem die Steuermittel (4) ein Register umfassen, um zu speichern, wie viele Male das Begrenzungssystem (32) angesprochen hat.

## Claims

1. Process for commanding a spreader (1), the spreader having a body (10), a transport conveyor (20) motorised by conveyor drive means (21) and stretching more or less horizontally over the bottom of the body (10), and shredding means (30) for shredding the matter transported by the conveyor (20) to the shredding means (30), the shredding means (30) being driven by secondary drive means (13), process wherein the functioning of the shredding means (30) is commanded at the same time as the matter advances towards the shredding means (30), the process being **characterised by** the fact that when it is detected that the driving torque for the shredding means (30) is limited by a drive torque limiting system (32), an inversion of the conveyor (20) movement direction is commanded.

2. Process according to claim 1, wherein the movement direction is inverted for a predetermined length of time.

3. Process according to claim 1, wherein the movement direction is inverted for a predetermined conveyor (20) travel distance.

4. Process according to claim 1, wherein the movement direction is inverted until the end of the drive torque limitation on the shredding means (30).

5. Process according to claim 1, for secondary drive means (13, 31, 33) comprising a mechanical torque limiter (32) on a rotating shaft (13), wherein it is deduced that the torque is limited when the ratio between a rotation speed measured on a component on the shredding means (30) and a rotation speed upstream of the limitation system (32) is lower than a predetermined threshold.

6. Spreader of solid matter, notably manure, comprising a body (10), a transport conveyor (20) motorised by conveyor drive means (20) and stretching more or less horizontally over the bottom of the body (10), and shredding means (30) ) for shredding the matter transported by the conveyor (20) to the shredding means (30), secondary drive means (13, 31) for driving the shredding means (30), command means (4) for controlling the conveyor (20) drive means (21), **characterised by** the fact that besides a system (32) for limiting the torque driving the shredding means (30), it comprises means for detecting (17, 34) actuation of the limitation system (32) connected to the command means (4), with the command means (4) controlling the inversion of the movement of the conveyor (20) when the limitation system (32) comes into operation.

7. Spreader according to claim 6, wherein the conveyor (20) drive means are hydraulic.

8. Spreader according to claim 6, wherein the secondary drive means (13, 31) are mechanical, the detection means comprise two sensors (17, 34) detecting the angular position or the speed respectively upstream and downstream of the limitation system (32).

9. Spreader according to claim 6, wherein the command means (4) comprise a register for memorising the number of times the limitation system (32) has functioned.
